(19) Europäisches Patentamt

European Patent Office

Office européen des brevets

(11) **EP 4 645 238 A1**

(12) **EUROPEAN PATENT APPLICATION**
published in accordance with Art. 153(4) EPC

(43) Date of publication:
**05.11.2025 Bulletin 2025/45**

(21) Application number: **23910954.9**

(22) Date of filing: **29.12.2023**

(51) International Patent Classification (IPC):
*G06T 17/00* (2006.01)

(52) Cooperative Patent Classification (CPC):
**G06T 15/08;** G06T 2210/41

(86) International application number:
**PCT/CN2023/143364**

(87) International publication number:
**WO 2024/141041 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.12.2022 CN 202211734767**

(71) Applicant: **Shanghai Ea Medical Instruments
Company Limited
Shanghai 200433 (CN)**

(72) Inventors:
• WANG, Ge
Shanghai 200433 (CN)
• FENG, Yang
Shanghai 200433 (CN)

(74) Representative: **Ipsilon
Le Centralis
63, avenue du Général Leclerc
92340 Bourg-la-Reine (FR)**

(54) **ORAL CAVITY MODEL DISPLAY METHOD AND APPARATUS, MULTI-PLANAR REFORMATION METHOD AND APPARATUS, DEVICE, AND READABLE STORAGE MEDIUM**

(57) An oral cavity model display method and apparatus, a multi-planar reformation method and apparatus, a device, and a readable storage medium. The oral cavity model display method comprises: acquiring three-dimensional oral cavity model data; in response to an enable command for a multi-planar reformation function, determining a target file corresponding to the three-dimensional oral cavity model, the target file comprising a compressed image compressed on the basis of an original image in an original medical image file; and according to the target file, displaying a three-dimensional oral cavity model having a multi-planar reformation function. The data storage amount and the data transmission amount of the target file can be reduced, the multi-planar reformation efficiency is improved, and thus the use experience of users is improved.

EP 4 645 238 A1

Generating a target file according to the acquired oral 3D model data — S101

Performing multi-planar reformation according to the target file to obtain a target section image — S102

FIG. 1

## Description

## Technical Field

The disclosure herein relates to the field of medical technology, and in particular to a method, apparatus, device and readable storage medium for displaying and reconstructing an oral cavity model.

## Background

With the development of medical imaging technology, multi-planer reformation (MPR) technology has attracted more and more attention. Based on the original three-dimensional CT volume data, CT MPR reconstructs images in a specific direction such as coronal, sagittal, transverse or any angle to generate a two-dimensional plane. Clinicians can view the tissue and organ information of the target plane by selecting a spatial point position and selecting the rotation direction through the mouse or keyboard in the software.

However, due to the large amount of original image data, data storage and data transmission efficiency, display, etc. are restricted, resulting in low MPR efficiency, low doctor observation efficiency, inconvenient operation and other problems.

## Summary

The present disclosure provides a display, multi-planar reformation method, apparatus, device, and readable storage medium to improve the above problems.

In the first aspect, the present disclosure provides a method for displaying an oral cavity model, including:
obtaining oral cavity three-dimensional model data; determining a target file corresponding to the oral cavity three-dimensional model in response to an enabling instruction of a multi-planar reformation function; wherein the target file includes a compressed image compressed according to an original image corresponding to the oral cavity three-dimensional model data; and displaying an oral cavity three-dimensional model of the multi-planar reformation function based on the target file.

In the second aspect, the present disclosure provides a multi-planar reformation method, including:
obtaining a target file according to an obtained oral cavity three-dimensional model data; wherein the target file includes a compressed image compressed according to an original image corresponding to the oral cavity three-dimensional model data; performing a multi-planar reformation to obtain a target section image based on the target file.

Combining the first and second aspects, in a possible implementation, the method further includes:
obtaining a target position, wherein the target position is used for indicating a target position in a coordinate system corresponding to the compressed image included in the target file; performing a multi-planar reformation to obtain a target section image based on the target position and the target file.

Combining the first and second aspects, in a possible implementation, the target position includes at least one of following:
an initial position determined based on an enabling instruction of a multi-planar reformation function; or a target position determined based on an obtained operation instruction for the oral cavity three-dimensional model.

Combining the first and second aspects, in a possible implementation, the method further includes:

determining a target position in response to an operation instruction for the oral cavity three-dimensional model; wherein the target position includes at least one of following:

a target position corresponding to a target tooth obtained based on an operation instruction of a user, or a target position indicated based on an operation instruction of a user.

Combining the first and second aspects, in a possible implementation, the method further includes:
obtaining a target point, wherein the target point includes at least one of following: a target point corresponding to a target tooth indicated by an operation instruction of a user, or a target point indicated by an operation instruction of a user; determining the target position based on the target point.

Combining the first and second aspects, in a possible implementation, the method further includes:
taking a center of gravity of a target tooth as the target position corresponding to the target tooth.

Combining the first and second aspects, in a possible implementation, the obtaining the target position includes:
obtaining a target position in a coordinate system corresponding to the oral cavity three-dimensional model data; determining a target position in a coordinate system corresponding to the compressed image included in the target file based on the target position in the coordinate system corresponding to the oral cavity three-dimensional model data.

Combining the first and second aspects, in a possible implementation, the method further includes:
obtaining a target position in a coordinate system corresponding to the oral cavity three-dimensional model data in response to an operation instruction for the oral cavity three-dimensional model or the enabling instruction of the multi-planar reformation function.

Combining the first and second aspects, in a possible implementation, the obtaining the target position includes:
converting a target position in a coordinate system corresponding to the oral cavity three-dimensional model data to the coordinate system corresponding to the compressed image included in the target file through a coordinate system transformation matrix corresponding to the oral cavity three-dimensional model, to obtain the target position in the coordinate system corresponding to the compressed image.

Combining the first and second aspects, in a possible implementation, the method further includes: using a section image displayed in response to the enabling instruction of the multi-planar reformation function as a section image at an initial position.

Combining the first and second aspects, in a possible implementation, the operation instruction includes: a reset operation instruction, wherein the method further includes:
displaying a resetting section image in response to the reset operation instruction for the oral cavity three-dimensional model.

Combining the first and second aspects, in a possible implementation, the method further includes: the resetting section image includes at least one of following:
a section image displayed in response to the enabling instruction of the multi-planar reformation function; an initial section image with default settings; a default section image of a patient; or a user-specified resetting section image.

Combining the first and second aspects, in a possible implementation, the method further includes:

determining a first candidate point corresponding to each tooth in an upper jaw and a second candidate point corresponding to each tooth in a lower jaw based on a tooth crown grid data and a tooth root grid data in the oral cavity three-dimensional model;
converting the first candidate point and the second candidate point respectively to a coordinate system corresponding to the compressed image by using a coordinate system transformation matrix in the oral cavity three-dimensional model;
determining a designated point based on the first candidate point and the second candidate point in the coordinate system corresponding to the compressed image; and
using a position of the designated point in the coordinate system corresponding to the compressed image as an initial position.

Combining the first and second aspects, in a possible implementation, the method further includes:

determining a target value range based on an original image in an original medical image file;
compressing the original image in the original medical image file to obtain a compressed image; and
generating the target file based on the compressed image and the target value range.

Combining the first and second aspects, in a possible implementation, the method further includes:

determining an original value range of a specified parameter based on the original image in the original medical image file;
determining a target value range of the specified parameter based on a preset standard value range of the specified parameter and the original value range.

Combining the first and second aspects, in a possible implementation, the determining the target value range of the specified parameter based on the preset standard value range of the specified parameter and the original value range, includes:

determining whether a parameter upper limit of the original value range is greater than a parameter upper limit of the preset standard value range;
taking the original value range as the target value range of the specified parameter in response to the parameter upper limit of the original value range being greater than the parameter upper limit of the preset standard value range;
taking the preset standard value range as the target value range of the specified parameter in response to the parameter upper limit of the original value range not greater than the parameter upper limit of the preset standard value range.

Combining the first and second aspects, in a possible implementation, the method further includes: updating the specified parameter of the original image in the original medical image file based on the target value range to determine a grayscale image corresponding to the original image in the original medical image file; wherein the grayscale image is used for obtaining the compressed image after compression.

Combining the first and second aspects, in a possible implementation, the method further includes:

determining whether the specified parameter of the original image in the original medical image file falls within the target value range;
not updating the specified parameter of the original image in the original medical image file in response to the specified parameter of the original image in the original medical image file falling within the target value range;
updating the specified parameter of the original image in the original medical image file based on a parameter upper limit and a parameter lower limit of the target value range in response to the specified parameter of the original image in the original medical image file not falling within the target value range.

Combining the first and second aspects, in a possible implementation, the method further includes: normalizing an updated specified parameter.

Combining the first and second aspects, in a possible implementation, the method further includes:

normalizing the updated specified parameter based on the parameter upper limit and parameter lower limit of the target value range to obtain a grayscale value of the original image in the original medical image file;

determining the grayscale image corresponding to the original image in the original medical image file based on the grayscale value of the original image in the original medical image file.

Combining the first and second aspects, in a possible implementation, the method further includes:

obtaining a first grid data; wherein the first grid data includes at least one of following: a tooth crown grid data, a tooth root grid data;

aligning a coordinate system corresponding to the first grid data with a coordinate system corresponding to the compressed image to obtain a coordinate system transformation matrix;

generating an oral cavity three-dimensional model based on the coordinate system transformation matrix and the first grid data.

Combining the first and second aspects, in a possible implementation, the generating an oral cavity three-dimensional model based on the coordinate system transformation matrix and the first grid data includes:

segmenting an original image in an original medical image file based on the second grid data to obtain a second grid data; wherein the second grid data is at least partially different from the first grid data; the second grid data belongs to an oral cavity model data of a patient;

determining a coordinate system corresponding to the second grid data as the coordinate system corresponding to the compressed image; and

generating the oral cavity three-dimensional model based on the coordinate system transformation matrix, the first grid data and the second grid data.

Combining the first and second aspects, in a possible implementation, a first identification code is stored in the oral three-dimensional model, and a second identification code is stored in the target file; the determining the target file corresponding to the oral cavity three-dimensional model includes:

determining the first identification code corresponding to the oral cavity three-dimensional model and the second identification code stored in the target file; and

determining the target file corresponding to the oral cavity three-dimensional model based on the first identification code and the second identification code.

Combining the first and second aspects, in a possible implementation, the original image is an oral cavity image; wherein the method further includes: obtaining a pre-generated oral cavity three-dimensional model corresponding to the original medical image file in response to a reformation request input by a user, and displaying the oral cavity three-dimensional model.

In the fifth aspect, the present disclosure provides a display apparatus, including a display device, a memory, a processor and a computer program stored in the memory and executable on the processor, wherein in response to the processor executing the computer program, the method described in the first or second aspect is implemented through the display device.

The present disclosure provides a computer-readable storage medium, configured to store a computer program, wherein in response to the computer program being executed by a processor, the method described in any one of above embodiments is implemented.

The present disclosure provides an electronic device, including a memory, a processor and a computer program stored in the memory and executable on the processor, the processor implements the method described in any one of above embodiments when executing the computer program.

In the multi-planar reformation method and display method provided in the present disclosure, a target file is generated through the original image corresponding to the oral cavity three-dimensional model data, and multi-planar reformation is performed according to the target file. By compressing and generating the target file, the data storage volume and data transmission volume of the target file used for multi-planar reformation can be greatly reduced, which effectively improves the efficiency of multi-planar reformation, improves the viewing efficiency of doctors, helps to improve the diagnosis and treatment efficiency of doctors, and improves the user's operating experience.

**Brief Description of Figures**

FIG. 1 is a schematic diagram of a flow chart of a multi-planar reformation method in the present disclosure;

FIG. 2 is a schematic diagram of a flow chart of a method for generating an oral cavity model in the present disclosure;

FIG. 3 is a schematic diagram of a flow chart of a method for displaying an oral cavity model in the present disclosure;

FIG. 3A - FIG. 3B are schematic diagrams of a display interface in the present disclosure;
FIG. 4 is a schematic diagram of an electronic device provided by the present disclosure.

## Detailed Description

In order to make the purpose, technical solutions and advantages of the present disclosure clearer, the technical solutions of the present disclosure will be clearly and completely described below in combination with the specific embodiments of the present disclosure and the corresponding drawings. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

MPR can reform images in a specific direction or at any angle to generate two-dimensional planes, such as the coronal plane, sagittal plane, and transverse plane.

Taking CT as an example, CT's MPR technology reforms images based on the original three-dimensional CT volume data in specific directions such as coronal, sagittal, transverse or any angle to generate a two-dimensional plane. Specifically, after obtaining specific direction information and spatial point positions, the volume data is rotated and interpolated, and then discrete spatial data sampling is performed, and finally a new two-dimensional plane is formed based on the generated MPR data values. Clinicians can view the tissue and organ information of the target plane by selecting a spatial point position and selecting the rotation direction through the mouse or keyboard in the software.

In the original medical image file, the size of the original image data is related to the spatial resolution and the size of the visual field. The higher the spatial resolution is and the larger the visual field is, the larger the storage space occupied by the original image data is.

The size of CT volume data is affected by spatial resolution (voxel size) and visual field (number of voxels); the higher the spatial resolution is and the larger the visual field is, the larger the storage space occupied by the data is, and vice versa. For example, the resolution of oral CT data is generally between 0.15 - 0.5 mm, and the visual field is generally between 200*200*200 and 1000*1000*1000 (the three numbers refer to the number of pixels in the X, Y, and Z directions, and their product is the number of voxels in the entire CT data), and the storage space occupied is generally between 30 M and 2 G.

In order to obtain an accurate reformed image, the amount of original image data is usually large, which not only requires more storage space but may also lead to low MPR operation efficiency.

When users open and perform interactive MPR operations locally, the initial loading time and intermediate calculation time are considerable. When the hardware memory is small, it is easy to experience lag.

In one application scenario, when a doctor opens the original image data on the local operating system and switches the target plane to trigger MPR, the required loading time and MPR calculation time are considerable. When the operating system has a small hardware memory, it is easy to get stuck, reducing the efficiency of MPR.

When it comes to data transmission, the current situation is generally to process data through a remote workstation, or transmit it to a local PC digitally via a network, and then load and read the data using software.

In another application scenario, the user can also remotely process the original image data through a remote workstation to perform MPR operations, or transmit the original image data stored in the remote workstation to the local through digital transmission methods such as network transmission, and then perform MPR operations. This scenario involves the problem of data transmission. Due to the large amount of original image data, MPR operations and data transmission are both restricted by the transmission bandwidth, which increases the user's time cost and reduces the efficiency of MPR.

Both methods involve transmission efficiency issues, especially bandwidth dependence. Taking network transmission as an example, a 500 M compressed file takes more than 4 minutes to complete transmission at a speed of 2 M/S, which increases the user's time cost. The data volume is large, the transmission efficiency is low, and the computer hardware requirements are high.

On the other hand, in oral CT images, a certain tooth may only occupy a small part of the visual field of the entire two-dimensional image. When doctors view the specific image performance of a certain tooth, they need to first determine the jaw position and then browse the sequence images to find the center point position of the current tooth, and then zoom in, rotate, and switch planes. If each tooth needs to be carefully viewed, the time consumed by the preliminary positioning and MPR interaction operations is considerable. In addition, during the observation process, doctors lack the intuitive guidance of the three-dimensional model, which leads to frequent switching of the center point position and rotation direction.

Based on this, the present specification provides a multi-planar reformation method, which obtains a compressed image by performing an image compression operation on the original image, and generates a target file based on the compressed image, so that when the user performs an MPR operation, the target cross-sectional image can be obtained by performing multi-planar reformation through the target file including the compressed image. The above scheme can reduce the data storage and data transmission volume of the target file, achieve the purpose of improving the efficiency of multi-planar reformation, and help improve the user's operating experience when using MPR interactive operations.

The technical solutions provided by the embodiments of the present disclosure are described in detail below in conjunction with the accompanying drawings.

In the embodiments of the present disclosure, a multi-planar reformation method is provided, and the execution process of the multi-planar reformation method can be performed by an electronic device such as a server, a terminal, a computer, etc. for multi-planar reformation. In the process of multi-planar reformation, the electronic device that performs the file generation process involved can be the same as or different from the electronic device that performs the multi-planar reformation method, and the present disclosure does not limit this.

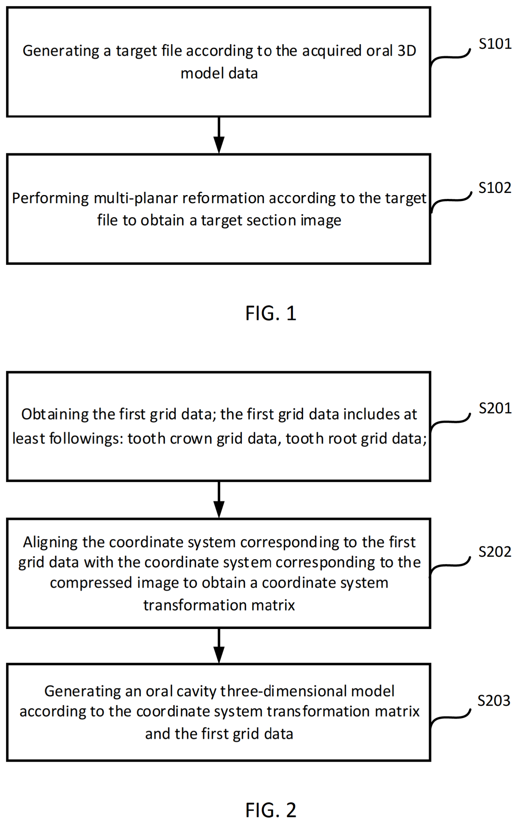

FIG. 1 is a schematic flow chart of a multi-planar reformation method provided by a present disclosure.

S101: Generating a target file according to the acquired oral 3D model data.

The target file includes a compressed image compressed according to the original image corresponding to the oral three-dimensional model data. In another possible manner, the target file includes a compressed image compressed according to the original image of the original medical image file.

S102: Performing multi-planar reformation according to the target file to obtain a target section image.

In the multi-planar reformation method provided in the present specification, by compressing the original image corresponding to the oral three-dimensional model data, multi-planar reformation can be achieved without using files with large data volumes of original medical image files. This can greatly reduce the data storage volume and data transmission volume of the target files used for multi-planar reformation, thereby achieving the purpose of improving the efficiency of multi-planar reformation.

In the embodiments of the present specification, the original medical image file obtained may be a Digital Imaging and Communications in Medicine (DICOM) file, or a file storing the medical image data of the patient in other existing file forms. The original images in the original medical image file may be stored and arranged in the form of an image sequence, and the original images in the sequence may be arranged in sequence according to the order of image acquisition. Of course, they may also be stored and arranged in other forms. The present specification does not limit the file type of the original medical image file and the storage and arrangement form of the original images. The original image contained in the original medical image file may be an image obtained by computed tomography (CT), an image obtained by magnetic resonance Imaging (MRI), an image obtained by low-dose positron emission computed tomography (PET), or an image obtained by other modal medical image acquisition schemes. In the present embodiment, no specific limitation is imposed on the modality used to acquire the original image contained in the original medical image file.

In one or more embodiments of the present disclosure, the data included in the oral 3D model may be derived from the original medical image file, or data obtained by rescanning a designated part of the patient. In one possible implementation, the oral 3D model data may be obtained after obtaining the original medical image file, or may be obtained based on oral scan data, which is not limited here. Optionally, the oral 3D model data may include: the original image corresponding to the original medical image file, or may include a compressed image corresponding to the original medical image file. For the specific implementation method, refer to the specific implementation scenario, which is not limited here.

In addition, depending on different application scenarios, the original image in the original medical image file presents different parts of the patient. The original image can be an oral image, a facial image, a lateral head image, etc. The present disclosure does not limit this.

For the convenience of description, the present disclosure takes the original medical image file as a DICOM file, and the original image in the original medical image file is derived from a CT scan as an example to elaborate on the specific technical solution.

Optionally, the original medical image file may be obtained from a Picture Archiving and Communication Systems (PACS), or may be obtained in real time from a medical image acquisition device, which is not limited in the present disclosure.

Furthermore, in addition to storing one or more original images, the DICOM file also stores various types of attribute information of the original images, such as spatial resolution (voxel size), the size of visual field (number of voxels), window width and window position, and CT value of volume data.

It should be noted that the original image, compressed image, grayscale image, original medical image file, and target file mentioned in the present disclosure can be one image or one file, or multiple images or one file, which is not limited here. The tooth data included in the oral 3D model data can be the data of one tooth, multiple teeth, or part of a tooth, which is not limited here. The tooth mentioned in the present disclosure can be one tooth, multiple teeth, or part of at least one tooth, which is not limited here.

In a possible implementation manner, the original value range of the specified parameter may be determined according to the original image in the original medical image file.

The window width and window position are attribute information used to observe normal tissues or lesions of different densities in CT examinations. Since various tissue structures or lesions have different CT values, when displaying the details of a certain tissue structure, the window width and window position suitable for observing the tissue or lesion should be chose to obtain the best display.

However, since the original window width and window position stored in the original medical image file may not necessarily present an ideal visual effect, the contrast between different tissues may not be obvious, resulting in the user being unable to intuitively observe the different tissues presented on the image. For this, the original value range of the specified parameter can be extracted from the original medical image file so that the original value range can be adaptively adjusted later, so that the image can better display the details of different tissue structures.

The original medical image may store the original window width and the original window position, or directly store the original value range, which is not limited in the present disclosure.

It should be noted that the specified parameter here refers to the CT value, which can describe the density of the CT image. The CT value is a relative value obtained by a certain mathematical transformation of the X-ray attenuation coefficient measured by the detector. Usually, different human tissues correspond to different CT values, such as -1000 Hu is the CT value of air, and 3300 Hu is the CT value between metal and tooth porcelain.

In one or more embodiments of the present specification, a target value range can be determined based on the original image in the original medical image file. The original image can be compressed to obtain a compressed image, and a target file can be generated based on the compressed image and the target value range.

In a possible implementation, the original value range of the specified parameter may be determined according to the original image in the original medical image file, and the target value range of the specified parameter may be determined according to the preset standard value range of the specified parameter and the original value range. Of course, the target value range may also be determined according to other methods, which are not limited here.

A possible implementation method is to update the specified parameters of the original image according to the target value range, and determine the grayscale image corresponding to the original image. The grayscale image is used to obtain the compressed image after compression.

Of course, the image may also be compressed by other compression methods, which are not limited here.

In one or more embodiments of the present specification, the target value range of the specified parameter is determined according to the preset standard value range of the specified parameter and the original value range, and the original value range can be adjusted according to the relationship between the parameter upper limit of the original value range and the parameter upper limit of the standard value range, as follows:

determining whether the parameter upper limit of the original value range is greater than the parameter upper limit of the standard value range.

Specifically, the parameter upper limit of the original value range is original_CTmax, and the parameter upper limit of the standard value range is default_CTmax. If original_CTmax is less than default_Ctmax, the brightness of the CT value is compressed, which may cause the contrast between different types of tissues to be unclear. For example, when the window width is 4300 and the window position is 1150, the converted CT value range is [-1000, 3300], where -1000 is the CT value of air and 3300 is the CT value between metal and tooth porcelain. In practical applications, most of the CT data of the patient's oral CT is close to this value, showing good contrast between various tissues. Assuming that the original window width is only 2300 and the original window position is 0, the converted original value range is [-1150, 1150]. However, the CT value of some regions of the teeth is greater than 1150, which will cause the tooth region to have almost no contrast, the grayscale is compressed, and it will appear white.

For the above situation, in the embodiments of the present disclosure, the parameter upper limit of the original value range and the parameter upper limit of the standard value range can be compared, and the original value range can be adjusted according to the comparison result.

If so, the original value range is used as the target value range of the specified parameter.

Specifically, if original_CTmax is greater than default_CTmax, the original value range is not adjusted, that is, the original value range is the target value range of the specified parameter.

If not, the standard value range is used as the target value range of the specified parameter.

Specifically, if original_CTmax is not greater than default_CTmax, the standard value range is directly used as the target value range of the specified parameter.

In a possible implementation, a target value range of the specified parameter is determined according to a preset standard value range of the specified parameter and the original value range.

In order to obtain an image with high contrast and good visual effect, a standard value range of a specified parameter can be pre-set, and the standard value range can be compared with the original value range to obtain a target value range with an ideal visual effect. Specifically, the parameter upper and lower limits of the standard value range can be compared with the parameter upper and lower limits of the original value range, and the value range with more reasonable parameter upper and lower limits can be used as the target value range.

In a possible implementation, for each original image, the specified parameters of the original image are updated according to the target value range, and the updated specified parameters are normalized to determine the grayscale image corresponding to the original image.

In actual applications, there may be objects of other materials such as metal in the patient's mouth, so the range of actual CT values varies greatly, direct normalization will lead to grayscale compression, which will affect the image recognition and make it difficult for users to distinguish different tissue structures when observing the original image. Therefore, the specified parameters of the original image can be updated according to the determined target value range. The specific update processing method can be existing processing methods such as truncation processing and nonlinear mapping processing, which are not limited in the present disclosure.

For example, the updated specified parameter may be normalized according to the upper and lower limits of the parameter in the target value range. The normalization processing method may be any existing normalization processing method, and the present disclosure does not limit this.

Optionally, the present disclosure provides an optional normalization method for specifying parameters, and the formula is as follows:

$$\text{pixel\_value}' = \frac{pixel\_value - CT_{min}}{CT_{max} - CT_{min}}.$$

pixel_value' is the normalized specified parameter, pixel_value is the original specified parameter, $CT_{max}$ and $CT_{min}$ are the upper and lower limits of parameters of the target value range respectively.

Furthermore, a grayscale image corresponding to the original image is determined according to the normalized specified parameters of the original image.

Optionally, the normalized specified parameters can be used as the grayscale values of the pixels in the original image.

Optionally, the grayscale image corresponding to the original image is determined based on the grayscale value.

**In** a possible implementation, the grayscale image is compressed according to a preset image compression ratio to obtain a compressed image.

Specifically, the grayscale value of the pixel in the grayscale image obtained by the above steps is between 0 and 1, and the floating-point grayscale value between 0 and 1 can be converted into an 8-bit integer value in the range of 0 to 255 by image compression. The image compression rate can be a pre-set fixed value, or it can be determined based on the pixel size stored in the original medical image file. The image compression rate can be positively correlated with the pixel size, and the smaller the pixel size is, the lower the image compression rate is. Through the above operations, the data storage space is reduced while ensuring that the tissue structure information in the CT image is largely undistorted. In addition, the image compression method can be a JPEG compression method or other encoding compression methods, which are not limited in the present disclosure.

Optionally, in addition to being related to pixel size, the image compression rate may also be related to other parameters related to image quality, such as visual field size, number of voxels, resolution of the original image, etc. Therefore, the image compression rate may be determined based on several different types of attribute values, which is not limited in the present disclosure.

**In** a possible implementation, a target file is generated according to the compressed image and the target value range.

Specifically, the compressed image and the target value range can be written into a file to obtain the target file by generating a serialized structure data format. For example, the serialized structure data format can be protobuf or the like.

Optionally, other types of attribute information in the original medical image file may also be written into the target file, such as pixel size, visual field size, shooting direction, etc.

In a possible implementation, the specified parameters of the original image may be updated according to the target value range. Specifically, the specified parameters may be updated according to the relationship between the target value range and the specified parameters of the original image. For example, it can be determined whether the specified parameters of the original image fall within the target value range.

In order to ensure that the CT values of objects made of metal or other materials in the patient's mouth do not have an excessive impact on the contrast between other tissues in the image, the specified parameters of the original image are truncated according to the target value range, that is, if the specified parameters of the original image are within the target value range, the specified parameters of the original image will not be updated.

If so, the specified parameters of the original image are not updated.

If not, the specified parameters of the original image are updated according to the upper limit and the lower limit of the target value range.

If the specified parameter of the original image is not within the target value range, then when the specified parameter is greater than the upper limit of the target value range, the specified parameter is updated to be the upper limit of the target value range; when the specified parameter is less than the lower limit of the target value range, the specified parameter is updated to be the lower limit of the target value range.

In a possible implementation, the updated specified parameters are normalized according to the upper and lower limits of the target value range to obtain the grayscale value of the original image, and the grayscale image corresponding to the original image is determined according to the grayscale value of the original image.

In another possible implementation, considering the compression effect of the embodiment of the present application, the generation process of the oral cavity model can use the target file to further improve the effect of multi-planar reformation. Based on this, the present application provides a method for generating an oral cavity model, referring to the following embodiment, as shown in FIG. 2, including:

> S201: Obtaining the first grid data; the first grid data includes at least the followings: tooth crown grid data, tooth root grid data;
> S202: Aligning the coordinate system corresponding to the first grid data with the coordinate system corresponding to the compressed image to obtain a coordinate system transformation matrix;
> S203: Generating an oral cavity three-dimensional model according to the coordinate system transformation matrix and the first grid data.

In a possible implementation, the oral cavity model data may be obtained through a collection device. The collection device can be used to collect data from original medical image files, or it can be an oral cavity scanning device.

In an optional embodiment of the present disclosure, the tooth crown grid data can be obtained by scanning device to improve the accuracy of the crown data in the oral cavity three-dimensional model. For example, the oral cavity model data can be obtained in advance by scanning device. The oral cavity model data can include crown grid data, gingiva data, etc.

Considering the tooth root scenario, in a possible implementation, the original image in the original medical image file is segmented according to the tooth crown grid data to obtain the tooth root grid data. The coordinate system corresponding to the tooth root grid data id determined as the coordinate system corresponding to the compressed image. The oral cavity three-dimensional model is generated according to the tooth crown grid data, the tooth root grid data, and the coordinate system transformation matrix.

Considering that the original image in the original medical image file includes crown data and root data, but the crown grid data obtained by an oral scanning probe or other direct scanning device is more accurate. In a possible implementation, the crown grid data is obtained through a scanning device. The coordinate system corresponding to the crown grid data is aligned with the coordinate system corresponding to the compressed image to obtain a coordinate system transformation matrix. The oral cavity three-dimensional model is generated according to the crown grid data and the coordinate system transformation matrix.

In a possible implementation, for the tooth crown, the crown grid data is obtained by scanning with a scanning device, the crown data in the original image can be appropriately deleted, and the data of the tooth root can be retained. A specific method can be to align the crown part in the original image according to the crown grid data obtained by the scanning device, segment the crown part in the original image, and then delete the crown part to obtain the tooth root data in the original image. Then, the tooth root data in the original image can be reformed to obtain the root grid data.

In another possible implementation, is that the crown part can also use the grid data of the crown or root obtained from the original medical file. Therefore, the crown or root data in the original image can be appropriately deleted, and the data of the crown or root part can be retained. The specific method can be to align the root or root part in the original image according to the acquired root or root grid data, segment the root or root part in the original image, and then delete the corresponding part to obtain the compressed data in the original image, and then reconstruct the compressed data in the original image to obtain the oral grid data.

In a possible implementation, the crown part can also use the crown grid data or root grid data obtained from the original medical file. Therefore, the crown or root data in the original image can be appropriately deleted, and the part of the crown or root data can be retained. A specific method can be to align the part of the root in the original image according to the obtained part of root grid data, segment to obtain the part of the root in the original image, and then delete the part of root to obtain the crown data and a part of root data in the original image, and then reform the oral data in the original image to obtain the oral cavity grid data.

In a possible implementation, the alignment method between the coordinate system corresponding to the specific crown grid data and the coordinate system corresponding to the compressed image can be any medical image alignment method, such as alignment between the vertices of the crown grid data and the vertices of the root grid data, an alignment based on deep learning to extract feature descriptors and iteratively optimize the objective function, or an alignment based on deep reinforcement learning. The present disclosure does not limit the specific registration method.

For example, features are extracted from the crown grid data and the root grid data respectively, and a suitable affine transformation model is selected to transform the features of the crown grid data. The similarity between the features of the transformed crown grid data and the features of the root gird data is determined, and the parameters of the affine transformation model are adjusted with maximizing the similarity as the optimization goal.

Optionally, the oral cavity three-dimensional model may be stored in a three-dimensional model file, and the three-dimensional model file may also be parsed in a manner similar to that of the target file, referring to the above implementation method, which will not be described in detail here.

In an optional embodiment, since the multi-planar reformation needs to be based on the compressed image contained in the target file, when obtaining the oral cavity three-dimensional (3D) model, it is also necessary to obtain the target file corresponding to the oral cavity 3D model. Specifically, the correspondence between the oral cavity 3D model and the target file can be pre-stored, such as establishing the correspondence through the patient's identification.

In an optional embodiment of the present specification, since the three-dimensional model data in the oral cavity 3D model can be derived from the original medical image file of the patient, the original image in the original medical image file can be an oral cavity image. A first identification code can be generated and stored in the oral cavity 3D model. Correspondingly, when the target file is generated, a second identification code can also be generated. When determining the target file corresponding to the oral cavity 3D model, a target file whose second identification code is the same as the first identification code of the oral cavity 3D model in the target files can be used as the target file corresponding to the oral cavity 3D model by matching the first identification code and the second identification code. It should be noted that the generation method and generation basis of the first identification code and the second identification code of the oral cavity 3D model and the target file with a corresponding relationship should be the same, so that the same identification code can be generated. The generation basis of the first identification code (or the second identification code) can be the serial number of the original medical image file, or the identity information of the patient, etc., which is not specifically limited in the present disclosure. In addition, the generation method of the first identification code (or the second identification code) can be any existing identification code generation method, which is not limited in the present disclosure.

In an optional embodiment, the three-dimensional model file may also store a coordinate system corresponding to the oral cavity 3D model, and a coordinate system transformation matrix for converting the coordinate system to the coordinate system corresponding to the image contained in the target file. When the user selects a target tooth on the displayed oral cavity 3D model, the target point corresponding to the target tooth may be converted to the coordinate system corresponding to the image contained in the target file for subsequent multi-planar reformation.

In the embodiment of the present application, the CT value of the volume data and the attribute values in the DICOM header file such as pixel size, visual field size, window width and window position can be obtained based on the input sequence DICOM file. The global pixel gray value is normalized based on the adaptive window width and window position calculation, and the two-dimensional sequence file is performed by an image dynamic compression to generate a custom VOX file, which includes compressed CT volume data information and DICOM file information header and a file identification code. The input custom DDM file includes the grid information of the tooth three-dimensional model, the transformation matrix between the upper and lower jaw model coordinate system and the CT volume data coordinate system, and the same identification code as in the VOX file. The MPR function is realized by linking the VOX and DDM files and the user's mouse and keyboard input to perform calculations.

The following example illustrates the specific generation process of converting a sequence CT file into a custom VOX file.

VOX file is a custom file type that includes compressed CT volume data, DICOM information header and file identification code.

1) Adaptive window width and window position calculation: Before CT volume data compression, first determining the window width and window position values, and using them to determine the pixel value size of each two-dimensional image in the sequence. Specifically, first converting the original voxel value into a CT value according to the parameters in the DICOM information header, and obtaining the window width window_width and window position window _center values in the current information header. Setting the standard window width and window position values to default_window _width and default_window_center. Calculating the maximum CT range value ct_max = window_center + window_width/2, and calculate the maximum standard range value default_ct_max = default_window_center + default_window_width/2. If ct_max > default_ct_max, the window width and window position are not updated. At this time, the extreme value range of the CT value is calculated as CT_max = ct_max, CT_min = ct_min, ct_min = window_center - window_width/2; if ct_max < default_ct_max, the window width and window position are updated from the original window_width and window _center to default window _width and default_window_center. At this time, the extreme value range of the CT value is calculated as CT_max = default_ct_max, CT_min = default_ct_min, default_ct_min == default_window_center - default_window_width/2. The updated window width and window position information is written into the VOX file. In the present disclosure, the standard window width and window position values are set to 4300 and 1150, and the specific range can be adjusted without strict limitation.

2) Normalization of global pixel grayscale value: There may be objects of other materials such as metal in the patient's mouth, so the range of actual CT values varies greatly. Direct normalization will lead to grayscale compression, which will affect the image recognition and make it difficult for users to distinguish different tissue structures. According to the CT value range [CT_max, CT_min] calculated by adaptively adjusting the window width and window position in step 1), the CT value of the volume data pixel_value is traversed for truncation. If pixel_value > CT_max, setting pixel_value = CT_max, if pixel_value < CT_min, setting pixel_value = CT_min. The updated CT value of the volume data is globally normalized. Specifically, for the volume data pixel_value, the normalized value pixel_value' = (pixel_value-CT_min)/(CT_max-CT_min), and the CT values of all voxels are converted to grayscale values.

3) Dynamic image compression: After normalization in step 2), a grayscale value of floating-point type is obtained, which ranges from 0 to 1. The pixel grayscale value of each two-dimensional image in the corresponding DICOM sequence is also between 0 and 1. The floating-point grayscale value is converted into an 8-bit integer value with a range of 0-255 by image compression technology. The image compression rate is dynamically calculated according to the pixel size of the CT file. The compression rate is proportional to the pixel size. The smaller the pixel size is, the lower the compression rate, and the larger the pixel size is, the higher the compression rate is. The compression rate here refers to the ratio of the size of the file after compression to the size before compression. The higher the compression rate is, the closer it is to the original image. Through the above operation, the data storage space is reduced while ensuring that the tissue structure information in the CT image is not distorted to a great extent. The image compression technology involved in the present disclosure, such as JPEG compression and other coding compression, is a technology known to those skilled in the art, and the specific compression method is not limited here. In addition to being associated with the pixel size, the dynamic obtaining method of the compression rate can also be used to calculate the dynamic compression rate, and the specific obtaining behavior is not limited here. In the present disclosure, the voxel size is 0.3 mm as a benchmark, and the compression rate is set to 70%. When the voxel is smaller than the benchmark size, the compression rate is lower than 70%, and when the voxel is larger than the benchmark size, the compression rate is higher than 70%.

4) Custom VOX file generation: VOX file is an extensible file that can be generated through other serialized structured data formats such as protobuf. Write the DICOM file information header obtained in step 1) into the VOX file, specifically including a series of attribute values such as pixel size, visual field size, window width and window position, shooting direction, etc.; writing the sequence two-dimensional compressed image data obtained in step 3) into the VOX file. Then using the Series Instance UID information in the DICOM file information header to create an identification code for the VOX file, which determines the uniqueness of the current VOX file. The purpose of generating the identification code in the present disclosure is to ensure the uniqueness of the VOX file. Therefore, in addition to using the DICOM file information header, other methods for generating unique sequence values can also be implemented. No specific restrictions are made here, and they are all included in our claims.

5) Custom VOX file parsing: While generating serialized structure data in step 4), a corresponding file parser is also provided, which specifically includes the structure names of various attributes, access conditions, etc. the third-party software can read information from VOX files based on the provided file parser.

The following example illustrates how to generate a DDM file for a customized oral cavity 3D model.

The DDM file is a custom file type that includes the tooth grid data, the transformation matrix of the upper and lower jaw coordinate systems, and the file identification code. The tooth 3D model obtains the crown grid data by oral scanning or other equipment, and obtains the root grid data by segmentation and reformation of CT sequence images. The two gird data are aligned in the coordinate system, and then the data is fused to obtain the overall grid data of the teeth. The present disclosure does not involve specific gird generation operations, but only uses the generated tooth three-dimensional data and the corresponding transformation coordinate system. Specifically, it can be divided into the following steps.

1) 3D model composition structure: The DDM file includes the 3D grid data of all teeth in the case. Each tooth has an independent number and is independently distinguished from the grid data of other teeth. Teeth are divided into two categories: upper jaw teeth and lower jaw teeth.

2) Coordinate transformation matrix of upper and lower jaws: The digital crown grid data and the grid data obtained by CT segmentation reformation are aligned in the coordinate system in half jaws before generating the whole three-dimensional grid of teeth, and two sets of coordinate transformation matrices of upper jaw and lower jaw are obtained respectively. The transformation matrices of these two jaws are saved in the DDM file.

3) File identification code: Passing in the VOX file identification code generated in step 1), and saving the identification code in the DDM file to generate a binding relationship with the specified VOX file. The identification code determines the association between DDM file and the VOX file, and ensures the uniqueness of the opened file when there are multiple groups of different files in the folder.

The following example illustrates the linkage rules between a custom VOX file and a custom 3D model DDM file.

After downloading the VOX file and the DDM file, the user opens the DDM file in the software interface and clicks on any tooth region with the mouse. The corresponding MPR window will display the cross section of the current tooth. The specific linkage technology implementation can be divided into the following steps.

1) File binding relationship: When opening a DDM file, the software background parses the identification code of the DDM file. When the MPR function is turned on, the background parses all VOX files in the folder where the DDM is located according to the VOX file parser provided in step 1) to obtain identification codes of the VOX files, and finds the VOX file with the same identification code as the DDM.

2) Positioning the MPR plane with three-dimensional spatial points: After parsing the VOX file, all the information after decompression of the CT volume data is obtained, including volume data values, window width and window position, voxel size and shooting direction, etc.; after parsing the DDM file, the point coordinates of all tooth surface grids, the coordinate system transformation matrix of the upper and lower jaws, etc. are obtained. When the user clicks on the three-dimensional tooth surface with the mouse, the spatial point P is picked up with the coordinates $(x, y, z)$. According to this coordinate, the tooth surface on which the point is located is determined, and the center of gravity Pc of all grid points in the crown of the tooth is calculated to obtain the center position of the crown. Taking the upper jaw as an example, the Pc point becomes Pct under the action of the coordinate system transformation matrix of the upper jaws. At this time, the coordinate system of the Pc point is converted from the three-dimensional grid coordinate system to the CT volume data coordinate system; then according to the voxel size, the millimeter unit is converted into the voxel unit, and the Pct point becomes the Pctv point. According to the coordinates of the Pctv point $(x', y', z')$, the center point position of the CT voxel deployed by MPR can be obtained, and the cross-sectional views of the coronal plane, sagittal plane and transverse section can be obtained at this position. In this process, when the point P picked up by the mouse is converted to Pc, in addition to calculating the center of gravity based on the coordinates of the crown grid point, it can also be calculated based on the center of gravity of the root or the entire tooth grid point. The purpose is to locate the center point of a tooth on the CT voxel and perform MPR expansion based on this point. Therefore, the calculation method of the Pc point is not limited.

In an embodiment of the present disclosure, a method for displaying an oral cavity model is provided, and the execution process of the method for displaying an oral cavity model can be executed by an electronic device such as a server, terminal, computer, etc. used to determine the display of the oral cavity model. The method for displaying an oral cavity model involves a file generation process, and the electronic device executing the generation process may be the same as or different from the electronic device executing the multi-planar reformation method, and the present disclosure does not limit this. The method for displaying an oral cavity model involves a multi-planar reformation process, and the electronic device executing the generation process may be the same as or different from the electronic device executing the multi-planar reformation method or file generation, and the present disclosure does not limit this.

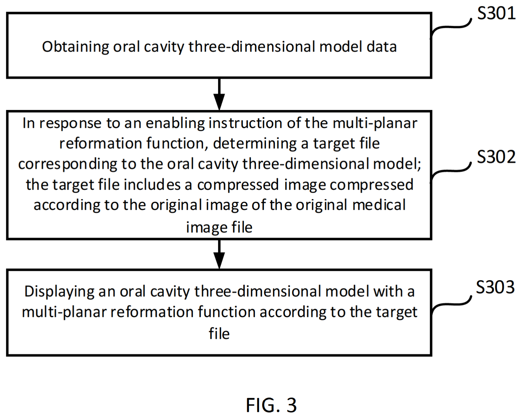

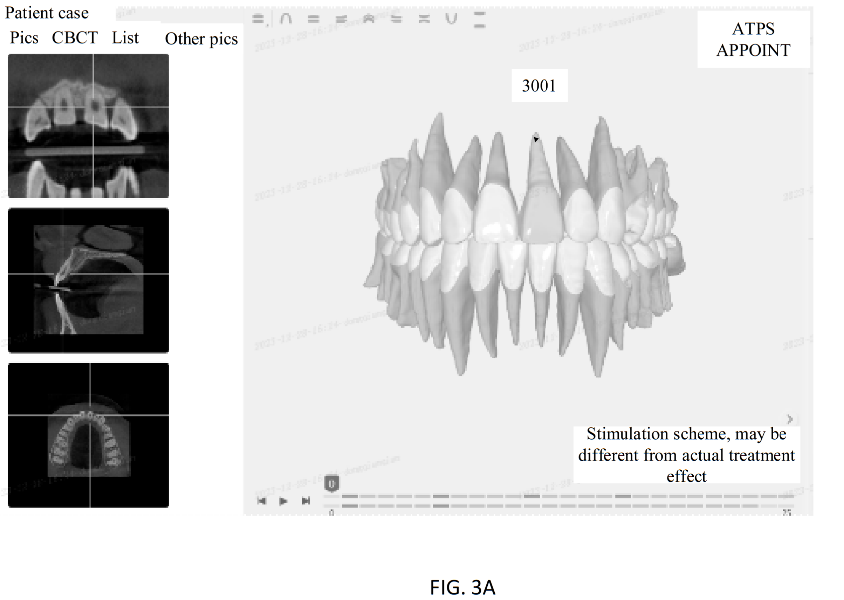

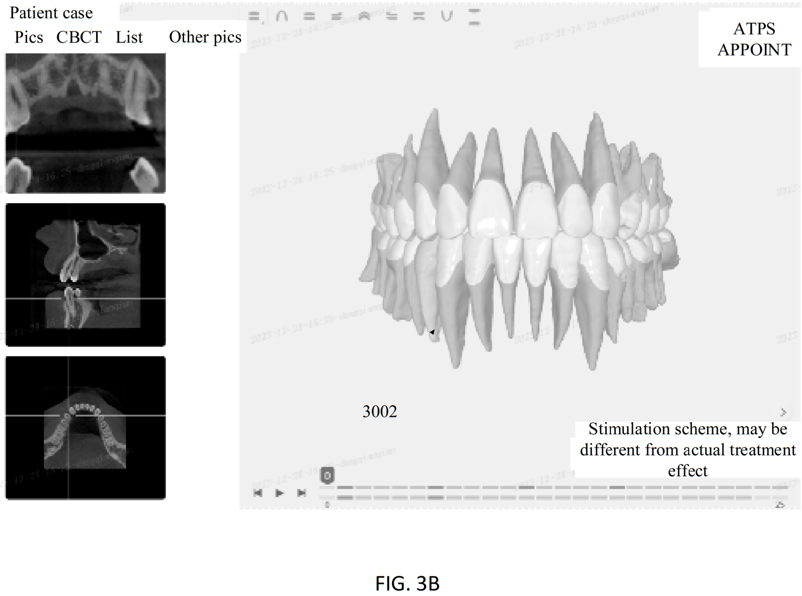

As shown in FIG. 3, an embodiment of the present disclosure provides a method for displaying an oral cavity model, the method including:

S301: Obtaining oral cavity three-dimensional model data;

S302: In response to an enabling instruction of the multi-planar reformation function, determining a target file corresponding to the oral cavity three-dimensional model; the target file includes a compressed image compressed according to the original image of the original medical image file;

S303: Displaying an oral cavity three-dimensional model with a multi-planar reformation function according to the target file.

In the embodiments of the present disclosure, the oral cavity three-dimensional model data may be obtained by any of the methods in the above embodiments, which is not limited here.

In a possible implementation, a complete three-dimensional tooth surface image can be constructed based on at least one of the crown grid data and the root grid data in the oral cavity three-dimensional model. The obtained oral cavity three-dimensional model data can include at least one of the crown grid data or the root grid data, or can be the corresponding oral cavity three-dimensional model data mentioned above, which is not limited here.

In one possible implementation, the enabling instruction of the multi-planar reformation function may be an instruction to turn on the multi-planar reformation function, or an operation instruction input by a user to instruct to turn on the function or display the oral cavity model, or a reformation request initiated by a user, or a pre-set instruction to turn on the multi-planar reformation function, for example, the multi-planar reformation function may be turned on when the interface for displaying the oral cavity model is turned on, which is not limited here.

For example, when a user opens a DDM file in the software interface, or when a user chooses to open the MPR function, an enabling instruction for the multi-planar reformation function is initiated, and the corresponding window will display the cross section where the current tooth is located.

For example, opening the DDM file in the software interface and clicking on the region of any tooth with the mouse to initiate an operation command, and the corresponding window will display the cross section of the current tooth. In a possible implementation, in response to the operation command input by the user, obtaining the oral cavity 3D model corresponding to the original medical image file generated in advance and displaying the oral cavity 3D model.

In a possible implementation, a target position in a coordinate system corresponding to the compressed image included in the target file in response to an operation instruction on the oral cavity three-dimensional model.

For example, when the user chooses to turn on the MPR function, the user can initiate various types of operation commands, such as mouse translation, scroll wheel sliding, or rotating the crosshairs formed by the X and Y axes to indicate the target position. The target position can be switched to different coronal, sagittal and transverse positions.

There are many ways to achieve multi-planar reformation according to the target file. It can be a method of displaying the target section image based on the target position indication, or other methods, such as a method of presetting the display of the initial section image corresponding to the initial position, or a method of displaying the resetting section image based on the reset function, which is not limited here.

The following example illustrates how to display a target section image based on the target position indication.

In a possible implementation, a target position is obtained, where the target position is used to indicate the target position in a coordinate system corresponding to a compressed image included in the target file, and multi-planar reformation is performed based on the target position and the target file to obtain a target section image.

In a specific implementation process, the target position can be determined based on the user's operation, so as to obtain the target section image. For example, the target position includes at least one of the following:

> an initial position determined based on an enabling instruction of the multi-planar reformation function; or
> a target position determined based on the obtained operation instruction for the oral cavity three-dimensional model.

Of course, the target position may also be determined based on other factors, as described below with a specific example.

In a possible implementation, a target position is determined in response to an operation instruction on the oral cavity three-dimensional model. The target position is at least one of the following: a target position corresponding to a target tooth obtained based on the user's operation instruction, or a target position indicated based on the user's operation instruction.

For example, in response to the user's operation instruction in the oral cavity three-dimensional model, the target position corresponding to the operation instruction can be determined in the target file, and multi-planar reformation is performed according to the target position to obtain the target section image.

For another example, a target point may be obtained, where the target point is at least one of the following: a target point corresponding to a target tooth indicated by a user's operation instruction, or a target point indicated by a user's operation instruction. The target position is determined based on the target point.

In one possible implementation, the user can select the teeth that need to be reformed in multiple-planar according to specific application needs. The tooth three-dimensional surface image is divided into the upper jaw and the lower jaw. Each tooth in the upper and lower jaws is numbered independently, and there is a corresponding relationship between the tooth number and the crown grid data and the root grid data corresponding to the tooth. That is, after the user selects a target point on the three-dimensional model, the position of the target point can be used to determine which tooth the user has selected.

In a possible implementation, a target point corresponding to the target tooth based on the oral cavity three-dimensional model. The target point is used to determine the target position of the target point in a coordinate system corresponding to the compressed image included in the target file.

In a possible implementation, after displaying the tooth three-dimensional surface image to the user, the user may input a target point based on the displayed tooth three-dimensional surface image through an input device.

Usually, the user needs to observe the reformed cross-sectional image of a certain tooth, so the position of the target point is generally on the tooth surface. Of course, if the target point selected by the user is not on the tooth, a multi-planar reformation operation can also be performed.

In a possible implementation, when the user selects a target point on a tooth, the tooth selected by the user can be determined based on the correspondence between the tooth crown grid data and the root grid data corresponding to the teeth, and the tooth can be used as the target tooth.

In a possible implementation, the center of gravity of the target tooth is used as the target position corresponding to the target tooth, and the target position is the position in the coordinate system corresponding to the tooth crown grid data of the oral cavity three-dimensional model.

Considering that if the teeth occupy only a small part of the visual field of the entire tooth three-dimensional surface image, when the user selects the target point for the MPR operation, the too small visual field will reduce the accuracy of the point selection, resulting in a large difference between the obtained cross-sectional image and the image required by the user, and increasing the time consumed by the user for the MPR operation.

In a possible implementation, the target position may be the position of the target tooth determined by the region corresponding to the target tooth selected by the user. For example, the position may be a key position of the target tooth as the target position, for example, the key position may be the position of the center of gravity. In practical applications, in addition to determining the center of gravity of the target tooth, the center of mass of the target tooth or the center of the crown surface may also be determined. The present disclosure does not limit this. The present disclosure only describes the specific technical solution by taking the determination of the center of gravity of the target tooth as an example, and does not mean that this solution can only be implemented by determining the center of gravity of the target tooth.

In a possible implementation manner, the center of gravity of the target tooth may be used as the target position corresponding to the target tooth.

In one or more embodiments of the present specification, the method includes the steps of: determining the center of gravity of the target tooth according to the tooth crown grid data corresponding to the target tooth, taking the center of gravity of the target tooth as the target point corresponding to the target tooth, and determining the position of the target point in the coordinate system corresponding to the tooth crown grid data.

It should be noted that, since the occlusal relationship between the upper and lower jaws in the patient's mouth is changing, the tooth crown grid data and the root grid data may not be collected in the same period of time, or the collection device is different, which will cause the occlusal relationship between the upper and lower jaws of the patient to change. Therefore, the coordinate system transformation matrix corresponding to the oral cavity 3D model can be divided into the coordinate system transformation matrix of upper jaw and the coordinate system transformation matrix of lower jaw. After determining the target tooth, it can be determined again whether the target tooth is in the upper jaw or in the lower jaw, and the corresponding coordinate system transformation matrix (of the upper jaw or the lower jaw) can be used to transform the position of the target point.

In a possible implementation, the position of the target point in the coordinate system corresponding to the crown grid data is converted into the coordinate system corresponding to the compressed image included in the target file through the coordinate system transformation matrix corresponding to the oral cavity three-dimensional model, and obtain the position of the target point in the coordinate system corresponding to the compressed image as the target position of the target point in the coordinate system corresponding to the compressed image included in the target file.

Through this solution using the center of gravity of the target tooth as the target position, the user only needs to roughly select a point or a region corresponding to the tooth to locate the tooth to be observed. A more accurate target section image can be obtained without carefully selecting the target point, thereby improving the efficiency of MPR.

In one or more embodiments of the present specification, an oral cavity three-dimensional model may also be obtained, so that the user can select a target point under the guidance of the oral cavity three-dimensional model to improve the accuracy of the target point.

In a possible implementation manner, the target position may also be obtained based on a determined target point.

For example, the target point can be a point selected by the user in the oral cavity three-dimensional model. After the target point is determined, the position of the target point in the coordinate system corresponding to the tooth crown grid data can be determined. According to the coordinate system transformation matrix corresponding to the oral cavity three-dimensional model, the position of the target point in the coordinate system corresponding to the tooth crown grid data can be converted to the coordinate system corresponding to the compressed image to obtain the position of the target point in the coordinate system corresponding to the compressed image. The target position of the target point in the coordinate system corresponding to the image included in the target file is used as the center point position of the MPR operation to obtain the target section image in any direction.

For another example, the target point may be a point selected by the user in the oral cavity three-dimensional model. After the target point is determined, the target tooth corresponding to the target point may be determined, thereby determining the target position based on the target tooth.

For example, in response to a reformation request input by a user, a pre-generated oral cavity three-dimensional model corresponding to the original medical image file can be obtained and the oral cavity three-dimensional model can be displayed. In response to a point selected by the user in the oral cavity three-dimensional model, a target tooth selected by the user is determined. A target file corresponding to the oral cavity three-dimensional model is determined. Based on the oral cavity three-dimensional model, a target point corresponding to the target tooth is determined, and a target position of the target point in a coordinate system corresponding to a compressed image included in the target file is determined. Multi-planar reformation is performed based on the target position to obtain a target section image.

By obtaining the oral cavity 3D model, determining and parsing the target file corresponding to the oral cavity 3D model. The user selects points based on the oral cavity 3D model, and then determines the target tooth selected by the user to determine the target point corresponding to the target tooth, and converts the target point from the coordinate system corresponding to the oral cavity 3D model to the coordinate system corresponding to the compressed image included in the target file to obtain the target position, and performing multi-planar reformation based on the target position to obtain the target section image. It can be seen that when performing multi-planar reformation using the target file including the compressed image, the user can also select the target point used for multi-planar reformation under the guidance of the oral cavity 3D model, which not only reduces the amount of data storage and data transmission, but also improves the accuracy of multi-planar reformation.

By obtaining and displaying a pre-generated oral cavity 3D model, the user can select the target point of the MPR operation under the guidance of the oral cavity 3D model, thereby improving the efficiency and accuracy of the target point selection.

After the target position deployed by MPR is obtained, the cross-sectional views of coronal, sagittal, and transverse can be obtained at this target position.

Optionally, after obtaining the target section image of MPR, the user can switch among different coronal, sagittal and cross-sectional positions by moving the mouse or sliding the scroll wheel. The reformation results of other planes can also be obtained by rotating the crosshairs formed by the X and Y axes. The specific interpolation method is similar to the existing interpolation method, and the present disclosure does not limit this.

For example, after downloading the VOX file and the DDM file, the user opens the DDM file in the software interface and clicks on the region of any tooth with the mouse. The corresponding MPR window will display the cross-section of the current tooth.

As shown in FIG. 3A and FIG. 3B, the selected tooth can be displayed in a different color than the unselected tooth. For example, the teeth 3001 and 3002 shown in the figure are displayed in different colors. At this time, the MPR window can automatically switch to the designated tooth position of CT. The MPR window can include windows under multiple viewing angles for displaying different cross-sectional images of the tooth.

When the user chooses to turn on the MPR function, the user can switch between different coronal, sagittal and cross-sectional positions by moving the mouse or sliding the scroll wheel, or by rotating the crosshairs formed by the X and Y axes to achieve user interaction. After obtaining the interactive operation instructions, the corresponding sections can be calculated based on the initial section of the MPR and the interactive operation instructions to obtain the reformation results of other planes.

During the calculation process, the voxel data can be compressed data obtained through VOX analysis, and the size of the voxel data is about 1/20 of the original DICOM sequence, which reduces the requirements for computer hardware and the amount of calculation in the interactive process, and can achieve real-time reformation and display.

In a possible implementation, the section image displayed in response to the enabling instruction of the multi-planar reformation function is a section image at an initial position.

The cross-sectional image at the initial position can be implemented in a variety of ways, and can be a default set initial cross-sectional image, the patient's default cross-sectional image, or determined according to a predetermined rule, and can be a cross-sectional image based on the corresponding initial position. The initial position can be a default one or a user-set one, which is not limited here.

In a possible implementation, the average coordinates P-up and P-low of all tooth grid points in the upper and lower jaws can be calculated respectively, and the corresponding voxel positions Pv-up and Pv-low can be obtained according to the coordinate transformation method of the upper and lower jaw coordinate systems. The average value Pvm of the corresponding voxel positions Pv-up and Pv-low is taken as the center point position of the CT voxel initially deployed by the MPR. After determining the initial position, the coronal, sagittal and transverse cross-sectional views are obtained at this position.

In some embodiments, after performing an interactive operation, the user can return to the initial result deployed by the MPR through the initial position reset function (or reset function).

In a possible implementation, in response to an instruction to perform a resetting operation on the oral cavity three-dimensional model, a resetting section image is displayed.

For example, the resetting section image may be at least one of the following:

a section image displayed in response to an enabling instruction of a multi-planar reformation function;
an initial section image with default settings;
a default section image of the patient; or
a user-specified resetting section image.

In an optional embodiment of the present disclosure, when the user opens the oral cavity 3D model for the first time to perform MPR reformation, or, after the target section image is reformed and the target point needs to be re-determined for MPR reformation again, the initial position of the initial point and the initial section image can be displayed to the user based on the crown gird data and root grid data included in the oral cavity 3D model, so that the user can reselect the target point based on the initial position.

For example, this may include:

firstly, according to the crown grid data and the root grid data of the oral cavity three-dimensional model, the first candidate point corresponding to the teeth of upper jaw and the second candidate point corresponding to the teeth of lower jaw are determined respectively.

In actual applications, when a user performs an MPR operation for the first time, or when a target point for MPR needs to be covered, the distance between the currently displayed position (the position of the current target point) and the position of the target point for the user's next MPR operation may be too far, making it difficult for the user to select the target point and prone to making selection errors.

Therefore, when the user opens the oral cavity 3D model for the first time to perform MPR reformation, or when the target point needs to be re-determined for MPR reformation again after the target section image is reformed, the position of the target point can be reset to the preset initial position, and the initial section image obtained by the MPR operation corresponding to the initial position can be displayed.

Specifically, since the oral cavity is divided into the upper jaw and the lower jaw, the average coordinates can be determined based on the crown grid data and root grid data of the teeth of the upper jaw to obtain the first candidate point corresponding to the teeth of the upper jaw. Similarly, the second candidate point corresponding to the teeth of the lower jaw can be obtained.

In addition, the average coordinates can be determined according to the crown grid data and root grid data of each tooth of the upper jaw to obtain the first candidate point corresponding to each tooth of the upper jaw. Similarly, the second candidate point corresponding to each tooth of the lower jaw can be obtained.

Optionally, beside averaging coordinates to obtain the first candidate point and the second candidate point, the first candidate point and the second candidate point may be obtained by averaging coordinates, determining weights of different teeth, and performing weighted averaging of coordinates. Of course, other existing methods are also possible, and the present disclosure does not limit this.

The first candidate point and the second candidate point are respectively converted to the coordinate system corresponding to the compressed image through the coordinate system transformation matrix in the parsed oral cavity three-dimensional model.

Furthermore, since it is necessary to obtain a cross-sectional image at the initial position, the first candidate point and the second candidate point must also be converted from their positions in the coordinate system corresponding to the crown grid data to the coordinate system corresponding to the compressed image to obtain their positions in the coordinate system corresponding to the compressed image.

Since the first candidate point corresponds to the upper jaw and the second candidate point corresponds to the lower jaw, the coordinate system transformation matrix of the upper jaw can be used to transform the position of the first candidate point, and the coordinate system transformation matrix of the lower jaw can be used to transform the position of the second candidate point. The specific coordinate system transformation matrix of the upper jaw and specific coordinate system transformation matrix of the lower jaw can refer to the above embodiments and will not be repeated here.

The designated point is determined according to the first candidate point and the second candidate point in the coordinate system corresponding to the compressed image.

Specifically, the position of the designated point can be determined based on the average of the position of the first candidate point in the coordinate system corresponding to the compressed image and the position of the second candidate point in the coordinate system corresponding to the compressed image. Of course, the position of the designated point can also be determined based on the position of the first candidate point in the coordinate system corresponding to the compressed image and the position of the second candidate point in the coordinate system corresponding to the compressed image by using existing methods such as weighted averaging, which is not limited in the present disclosure.

The multi-planar reformation is performed by taking the position of the designated point in the coordinate system corresponding to the compressed image as the initial position to obtain an initial section image.

In the multi-planar reformation method provided in the present disclosure, the original value range of the specified parameter is determined by the original image in the original medical image file, and the original value range is adjusted according to the preset standard value range of the specified parameter to obtain the target value range, and then for each original image, the specified parameters of the original image are updated according to the target value range, and the updated specified parameters are normalized to obtain the grayscale image corresponding to the original image, so that the grayscale image is compressed according to the preset image compression rate to obtain a compressed image, and then the target file is generated according to the compressed image and the target value range. When the user inputs a reformation request, the target section image can be obtained by performing multi-planar reformation according to the target file. It can be seen that the target value range is obtained by adjusting the original value range of the original image, the specified parameters of the original image are updated and normalized with the target value range to obtain a grayscale image, and the grayscale image is compressed to generate a target file. The image and attribute values required for multi-planar reformation are extracted as the target file, and multi-planar reformation can be achieved without using the original files with large data volumes. The data storage volume and data transmission volume of the target files used for multi-planar reformation can be greatly reduced, thereby achieving the purpose of improving the efficiency of multi-planar reformation.

Through the above method, the present disclosure provides a fast 3D interactive oral cavity CT data multi-planar reformation technology, which reduces the dependence on network transmission efficiency, and introduces the interactive calculation of the tooth three-dimensional model and two-dimensional image to reduce the tediousness and subjective dependence of the user's MPR operation.

Under the premise of ensuring that the tissue structure information in the CT image is not distorted to the greatest extent, the file transmission efficiency and the calculation speed during the MPR operation are improved. In addition, the user can directly locate the MPR specified plane of the CT volume data through simple and intuitive picking operations on the surface of the 3D model, which greatly simplifies the user's interaction process and reduces the user's subjective dependence.

An embodiment of the present disclosure provides a display device, including:

an obtaining module configured to obtain an oral cavity three-dimensional (3D) model data;
a processing module configured to determine a target file corresponding to the oral cavity three-dimensional model in response to an enabling instruction of the multi-planar reformation function; the target file includes a compressed image compressed according to an original image corresponding to the oral cavity three-dimensional model data; and
a display module configured to display the oral cavity three-dimensional model of the multi-planar reformation function according to the target file through the processing module.

The embodiment of the present disclosure provides a multi-planar reformation device, including:
a processing module configured to obtain a target file according to the oral cavity three-dimensional model data obtained by the obtaining module; the target file includes a compressed image compressed according to the original image corresponding to the cavity oral three-dimensional model data.

The processing module is configured to perform multi-planar reformation according to the target file to obtain a target section image.

A possible implementation includes:
the processing module is configured to obtain a target position through the obtaining module, where the target position is used to indicate the target position in the coordinate system corresponding to the compressed image included in the target file; according to the target position and the target file, perform the multi-planar reformation to obtain the target section image.

In a possible implementation manner, the target location includes at least one of the following:

an initial position determined based on an enabling instruction of the multi-planar reformation function; or
a target position determined based on the obtained operation instruction for the oral cavity three-dimensional model.

A possible implementation method also includes:
the processing module is configured to determine a target position in response to an operation instruction on the oral cavity three-dimensional model; the target position is at least one of the following: a target position corresponding to a target tooth obtained based on the user's operation instruction, or a target position indicated based on the user's operation instruction.

A possible implementation method also includes:
the processing module is configured to obtain a target point through the obtaining module, where the target point is at least one of the following: a target point corresponding to a target tooth indicated by a user's operation instruction, or a target point indicated by a user's operation instruction; and determine the target position according to the target point.

A possible implementation method also includes:
the center of gravity of the target tooth is taken as the target position corresponding to the target tooth.

A possible implementation for obtaining the target position, includes:
the processing module is configured to obtain the target position in the coordinate system corresponding to the oral cavity three-dimensional model data through the obtaining module, and determine the target position in the coordinate system corresponding to the compressed image included in the target file based on the target position in the coordinate system corresponding to the oral cavity three-dimensional model data.

A possible implementation also includes:
the processing module is configured to obtain the target position in the coordinate system corresponding to the oral cavity three-dimensional model data in response to the operation instruction of the oral cavity three-dimensional model or the enabling instruction of the multi-planar reformation function.

In a possible implementation, the processing module is configured to convert the target position in the coordinate system corresponding to the oral cavity three-dimensional model data to the coordinate system corresponding to the compressed image included in the target file through the coordinate system transformation matrix corresponding to the oral cavity three-dimensional model, so as to obtain the target position in the coordinate system corresponding to the compressed image.

A possible implementation also includes:
a display module configured to display the section image at the initial position in response to the enabling instruction of the multi-planar reformation function through the processing module.

**In** a possible implementation, the operation instruction includes a reset operation instruction, and the possible implementation further includes:
the display module configured to display the resetting section image in response to the reset operation instruction of the oral cavity three-dimensional model through the processing module.

A possible implementation further includes: the resetting section image is at least one of the following:

    a section image displayed by the display module when the processing module responds to an enabling instruction of the multi-planar reformation function;
    an initial section image with default settings;
    a default section image of the patient; or
    a user-specified resetting section image.

A possible implementation includes:
the processing module configured to determine the first candidate point corresponding to each tooth in the upper jaw and the second candidate point corresponding to each tooth in the lower jaw according to the crown grid data and the root grid data in the oral cavity three-dimensional model, convert the first candidate point and the second candidate point to the coordinate system corresponding to the compressed image through the coordinate system transformation matrix in the oral cavity three-dimensional model, determine the designated point according to the first candidate point and the second candidate point in the coordinate system corresponding to the compressed image, and use the position of the designated point in the coordinate system corresponding to the compressed image as the initial position.

A possible implementation method also includes:
the processing module configured to determine the target value range according to the original image in the original medical image file, compress the original image to obtain a compressed image, and generate a target file according to the compressed image and the target value range.

In a possible implementation manner, the method further includes:
the processing module is configured to determine the original value range of the specified parameter according to the original image in the original medical image file, and determine the target value range of the specified parameter according to the preset standard value range of the specified parameter and the original value range.

**In** a possible implementation, the processing module is configured to determine whether the parameter upper limit of the original value range is greater than the parameter upper limit of the standard value range; if so, use the original value range as the target value range of the specified parameter; if not, use the standard value range as the target value range of the specified parameter.

A possible implementation method also includes:
the processing module configured to update the specified parameters of the original image according to the target value range, and determine the grayscale image corresponding to the original image; the grayscale image is used to obtain the compressed image after compression.

A possible implementation method also includes:

    the processing module configured to determine whether the specified parameters of the original image fall within the target value range;
    if so, the specified parameters of the original image are not updated;
    if not, the specified parameters of the original image are updated according to the upper limit and the lower limit of the target value range.

A possible implementation method also includes:
the processing module configured to normalize the updated specified parameters.

In a possible implementation manner, the method further includes:
the processing module is configured to normalize the updated specified parameters according to the upper and lower limits of the target value range to obtain the grayscale value of the original image, and determine the grayscale image corresponding to the original image according to the grayscale value of the original image.

A possible implementation method also includes:
an obtaining module configured to obtaining a first grid data; the first grid data includes at least a part of followings: tooth crown grid data, tooth root grid data.

The processing module is configured to align the coordinate system corresponding to the first grid data with the coordinate system corresponding to the compressed image to obtain a coordinate system transformation matrix, and generate an oral cavity three-dimensional model based on the coordinate system transformation matrix and the first grid data.

A possible implementation method also includes:
the processing module configured to segment the original image in the original medical image file according to the second grid data to obtain second grid data; the second grid data is at least partially different from the first grid data; the second grid data belongs to the patient's oral cavity model data; determine the coordinate system corresponding to the second grid data as the coordinate system corresponding to the compressed image, and generate an oral cavity three-dimensional model according to the coordinate system transformation matrix, the first grid data and the second grid data.

A possible implementation includes:

the processing module configured to determine a first identification code corresponding to the oral cavity three-dimensional model and a second identification code stored in a target file, and determine the target file corresponding to the oral cavity three-dimensional model according to the first identification code and the second identification code.

In a possible implementation, the original image is an oral cavity image; the display module is further configured to obtain the oral cavity three-dimensional model corresponding to the pre-generated original medical image file in response to the reformation request input by the user through the obtaining module, and display the oral cavity three-dimensional model.

The present disclosure provides a multi-planar reformation device, specifically includes:

an original value range determination module 500 configured to obtain an original medical image file and determine the original value range of a specified parameter according to the original image in the original medical image file;

a target value range determination module 502 configured to determine a target value range of the specified parameter according to a preset standard value range of the specified parameter and the original value range;

a grayscale image determination module 504 configured to update the specified parameters of each original image according to the target value range, and normalize the updated specified parameters to determine the grayscale image corresponding to the original image;

a compression module 506 configured to compress the grayscale image according to a preset image compression ratio to obtain a compressed image;

a target file generating module 508 configured to generate a target file according to the compressed image and the target value range;

a reformation module 510 configured to perform multi-planar reformation according to the target file to obtain a target section image in response to a reformation request input by a user.

Optionally, the target value range determination module 502 is specifically configured to determine whether the parameter upper limit of the original value range is greater than the parameter upper limit of the standard value range; if so, use the original value range as the target value range of the specified parameter; if not, use the standard value range as the target value range of the specified parameter.

Optionally, the grayscale image determination module 504 is specifically configured to determine whether the specified parameters of the original image fall within the target value range; if so, the specified parameters of the original image are not updated; if not, the specified parameters of the original image are updated according to the upper and lower limits of the target value range.

Optionally, the grayscale image determination module 504 is specifically configured to normalize the updated specified parameters according to the parameter upper limit and parameter lower limit of the target value range to obtain the grayscale value of the original image, and determine the grayscale image corresponding to the original image according to the grayscale value of the original image.

Optionally, the original image in the original medical image file is an oral cavity image.

Optionally, the reformation module 510 is specifically configured to, in response to a reformation request input by a user, obtain a pre-generated oral cavity three-dimensional model corresponding to the original medical image file, and display the oral cavity three-dimensional model; in response to a point selected by the user in the oral cavity three-dimensional model, determine the target tooth selected by the user; determine the target file corresponding to the oral cavity three-dimensional model; determine the target point corresponding to the target tooth based on the oral cavity three-dimensional model, and determine the target position of the target point in the coordinate system corresponding to the compressed image included in the target file, and perform multi-planar reformation based on the target position to obtain a target section image.

Optionally, the reformation module 510 is specifically configured to determine the center of gravity of the target tooth based on the crown grid data in the oral cavity three-dimensional model; take the center of gravity of the target tooth as the target point corresponding to the target tooth, and determine the position of the target point in the coordinate system corresponding to the crown grid data; convert the position of the target point in the coordinate system corresponding to the crown grid data to the coordinate system corresponding to the compressed image included in the target file through the coordinate system transformation matrix corresponding to the oral cavity three-dimensional model, and obtain the position of the target point in the coordinate system corresponding to the compressed image as the target position of the target point in the coordinate system corresponding to the compressed image contained in the target file.

Optionally, the device further includes:

an initial section image determination module 512 specifically configured to determine the first candidate point corresponding to the teeth of upper jaw and the second candidate point corresponding to the teeth of lower jaw according to the crown grid data and the root grid data in the oral cavity three-dimensional model; convert the first candidate point and the second candidate point to the coordinate system corresponding to the compressed image through the coordinate system transformation matrix in the oral cavity three-dimensional model; determine the designated point according to the first candidate point and the second candidate point in the coordinate system corresponding to the compressed image; use the position of the designated point in the coordinate system corresponding to the compressed image as the initial position, perform multi-planar reformation, and obtain the initial section image.

Optionally, the device further includes:
an oral cavity three-dimensional model generation module 514 specifically configured to obtain crown grid data in advance through a scanning device; segment the original image in the original medical image file according to the crown grid data to obtain root grid data; determine the coordinate system corresponding to the root grid data as the coordinate system corresponding to the compressed image; align the coordinate system corresponding to the crown grid data with the coordinate system corresponding to the compressed image to obtain a coordinate system transformation matrix, and generate an oral cavity three-dimensional model according to the crown grid data, the root grid data, and the coordinate system transformation matrix.

Optionally, a first identification code is stored in the oral cavity three-dimensional model, and a second identification code is stored in the target file.

Optionally, the reformation module 510 is specifically configured to determine a first identification code corresponding to the oral cavity three-dimensional model; determine a second identification code stored in a target file, and use a target file having the second identification code same as the first identification code as the target file corresponding to the oral cavity three-dimensional model.

The present disclosure also provides a computer-readable storage medium storing a computer program, which can be used to execute the method for displaying an oral cavity three-dimensional model or the multi-planar reformation method shown in the above embodiments.

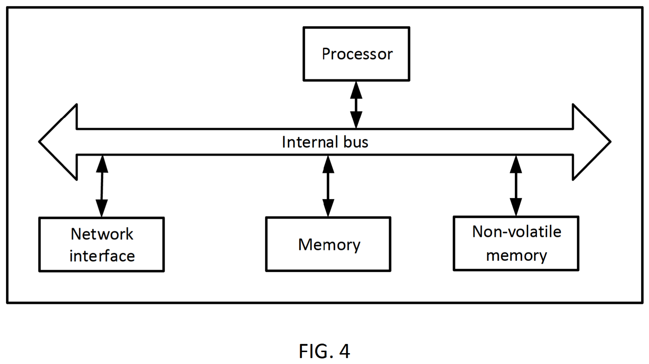

The present disclosure also provides a schematic structural diagram of the electronic device shown in FIG. 4. As shown in FIG. 4, at the hardware level, the electronic device includes a processor, an internal bus, a network interface, a memory, and a non-volatile memory, and of course may also include hardware required for other services. The processor reads the corresponding computer program from the non-volatile memory into the memory and then executes it to implement the above-mentioned oral cavity model display method or multi-planar reformation method. Of course, in addition to software implementation methods, the present disclosure does not exclude other implementation methods, such as logic devices or a combination of software and hardware, etc., that is to say, the execution subject of the following processing flow is not limited to each logic unit, but can also be hardware or logic devices.

For the convenience of description, the above device is described in various units according to their functions. Of course, when implementing the present disclosure, the functions of each unit can be implemented in the same or multiple software and/or hardware.

Those skilled in the art will appreciate that embodiments of the present disclosure may be provided as methods, systems, or computer program products. Therefore, the present disclosure may take the form of a complete hardware embodiment, a complete software embodiment, or an embodiment combining software and hardware. Moreover, the present disclosure may take the form of a computer program product implemented on one or more computer-usable storage media (including but not limited to disk storage, CD-ROM, optical storage, etc.) containing computer-usable program code.

In a typical configuration, a computing device includes one or more processors (CPU), input/output interfaces, network interfaces, and memory.

The memory may include volatile memory, such as random access memory (RAM) and/or cache memory, and may further include read-only memory (ROM).

The memory may also include a program tool (or utility) having a set (at least one) of program modules, such program modules including but not limited to: an operating system, one or more application programs, other program modules and program data, each of which or some combination may include the implementation of a network environment.

The processor executes various functional applications and data processing, such as the method in the above embodiments, by running the computer program stored in the memory.

The input and/or output device may include a scanning device, a camera interface, an input device (e.g., a mouse, a keyboard, etc.), a display device (e.g., a monitor), a printer, and/or one or more other input devices. The input/output interface may receive executable instructions and/or data, which may be stored in a data storage device (e.g., a memory), for example, may be used to receive or store data or a target file of an oral cavity model.

In some embodiments, the scanning device can be configured to scan one or more physical dental models of the patient's dentition. In one or more embodiments, the scanning device can be configured to directly scan the patient's dentition and/or dental appliances. The scanning device can be configured to input data into a computing device.

In some embodiments, the camera interface can receive input from an imaging device (e.g., a 2D or 3D imaging device), such as a digital camera, a printed photo scanner, and/or other suitable imaging device. For example, the input from the imaging device can be stored in a memory.

The processor may execute instructions to provide a display of the oral cavity model on a display, etc. For example, the computing device may be configured to allow a treatment professional or other user to input treatment goals. The received input may be sent to the processor as data and/or may be stored in a memory.

Such connectivity may allow for input and/or output of data and/or instructions and other types of information. Some embodiments may be distributed among various computing devices within one or more networks and used to collect, calculate and/or analyze any of the methods mentioned herein.

It should be noted that although several units/modules or sub-units/modules of the electronic device are mentioned in the above detailed description, this division is merely exemplary and not mandatory. In fact, according to the embodiments of the present disclosure, the features and functions of two or more units/modules described above can be embodied in one unit/module. Conversely, the features and functions of one unit/module described above can be further divided into multiple units/modules to be embodied.

This embodiment provides a computer-readable storage medium on which a computer program is stored. When the computer program is executed by a processor, the method in the above embodiments is implemented.

It will be appreciated by those skilled in the art that the embodiments of the present disclosure may be provided as methods, systems or computer program products. Therefore, the present disclosure may take the form of a complete hardware embodiment, a complete software embodiment or an embodiment combining software and hardware. Moreover, the present disclosure may take the form of a computer program product implemented on one or more computer-usable storage media (including but not limited to disk storage, CD-ROM, optical storage, etc.) containing computer-usable program code.

**Claims**

1. A method for displaying an oral cavity model, comprising:

   obtaining oral cavity three-dimensional model data;
   determining a target file corresponding to the oral cavity three-dimensional model in response to an enabling instruction of a multi-planar reformation function; wherein the target file comprises a compressed image compressed according to an original image corresponding to the oral cavity three-dimensional model data; and
   displaying an oral cavity three-dimensional model of the multi-planar reformation function based on the target file.

2. A multi-planar reformation method, comprising:

   obtaining a target file according to an obtained oral cavity three-dimensional model data; wherein the target file comprises a compressed image compressed according to an original image corresponding to the oral cavity three-dimensional model data;
   performing a multi-planar reformation to obtain a target section image based on the target file.

3. The method according to claim 1 or 2, further comprising:

   obtaining a target position, wherein the target position is used for indicating a target position in a coordinate system corresponding to the compressed image comprised in the target file;
   performing a multi-planar reformation to obtain a target section image based on the target position and the target file.

4. The method according to claim 3, wherein the target position comprises at least one of following:

   an initial position determined based on an enabling instruction of a multi-planar reformation function; or
   a target position determined based on an obtained operation instruction for the oral cavity three-dimensional model.

5. The method according to any one of claims 1 to 4, further comprising:
   determining a target position in response to an operation instruction for the oral cavity three-dimensional model; wherein the target position comprises at least one of following:

   a target position corresponding to a target tooth obtained based on an operation instruction of a user, or
   a target position indicated based on an operation instruction of a user.

6. The method according to any one of claims 3 to 5, further comprising:

   obtaining a target point, wherein the target point comprises at least one of following: a target point corresponding to a target tooth indicated by an operation instruction of a user, or a target point indicated by an operation instruction of a user;
   determining the target position based on the target point.

7. The method according to any one of claims 3 to 6, further comprising:

taking a center of gravity of a target tooth as the target position corresponding to the target tooth.

8. The method according to any one of claims 3 to 7, wherein the obtaining the target position comprises:

   obtaining a target position in a coordinate system corresponding to the oral cavity three-dimensional model data;
   determining a target position in a coordinate system corresponding to the compressed image comprised in the target file based on the target position in the coordinate system corresponding to the oral cavity three-dimensional model data.

9. The method according to any one of claims 3 to 8, further comprising:
   obtaining a target position in a coordinate system corresponding to the oral cavity three-dimensional model data in response to an operation instruction for the oral cavity three-dimensional model or the enabling instruction of the multi-planar reformation function.

10. The method according to any one of claims 3 to 9, wherein the obtaining the target position comprises:
    converting a target position in a coordinate system corresponding to the oral cavity three-dimensional model data to the coordinate system corresponding to the compressed image comprised in the target file through a coordinate system transformation matrix corresponding to the oral cavity three-dimensional model, to obtain the target position in the coordinate system corresponding to the compressed image.

11. The method according to any one of claims 1 to 10, further comprising:
    using a section image displayed in response to the enabling instruction of the multi-planar reformation function as a section image at an initial position.

12. The method according to any one of claims 1 to 11, wherein the operation instruction comprises: a reset operation instruction, wherein the method further comprises:
    displaying a resetting section image in response to the reset operation instruction for the oral cavity three-dimensional model.

13. The method according to any one of claims 1 to 12, further comprising: the resetting section image comprises at least one of following:

    a section image displayed in response to the enabling instruction of the multi-planar reformation function;
    an initial section image with default settings;
    a default section image of a patient; or

a user-specified resetting section image.

14. The method according to any one of claims 1 to 13, further comprising:

    determining a first candidate point corresponding to each tooth in an upper jaw and a second candidate point corresponding to each tooth in a lower jaw based on a tooth crown grid data and a tooth root grid data in the oral cavity three-dimensional model;
    converting the first candidate point and the second candidate point respectively to a coordinate system corresponding to the compressed image by using a coordinate system transformation matrix in the oral cavity three-dimensional model;
    determining a designated point based on the first candidate point and the second candidate point in the coordinate system corresponding to the compressed image; and
    using a position of the designated point in the coordinate system corresponding to the compressed image as an initial position.

15. The method according to any one of claims 1 to 14, further comprising:

    determine a target value range based on an original image in an original medical image file;
    compressing the original image in the original medical image file to obtain a compressed image; and
    generating the target file based on the compressed image and the target value range.

16. The method according to claim 15, further comprising:

    determining an original value range of a specified parameter based on the original image in the original medical image file;
    determining a target value range of the specified parameter based on a preset standard value range of the specified parameter and the original value range.

17. The method according to claim 16, wherein the determining the target value range of the specified parameter based on the preset standard value range of the specified parameter and the original value range, comprises:

    determining whether a parameter upper limit of the original value range is greater than a parameter upper limit of the preset standard value range;
    taking the original value range as the target value range of the specified parameter in response to the parameter upper limit of the original value range being greater than the parameter upper limit of the preset standard value range;
taking the preset standard value range as the target value range of the specified parameter in response to the parameter upper limit of the original value range not greater than the parameter upper limit of the preset standard value range.

18. The method according to any one of claims 1 to 17, further comprising:
updating the specified parameter of the original image in the original medical image file based on the target value range to determine a grayscale image corresponding to the original image in the original medical image file; wherein the grayscale image is used for obtaining the compressed image after compression.

19. The method according to any one of claims 1 to 18, further comprising:

determining whether the specified parameter of the original image in the original medical image file falls within the target value range;
not updating the specified parameter of the original image in the original medical image file in response to the specified parameter of the original image in the original medical image file falling within the target value range;
updating the specified parameter of the original image in the original medical image file based on a parameter upper limit and a parameter lower limit of the target value range in response to the specified parameter of the original image in the original medical image file not falling within the target value range.

20. The method according to any one of claims 1 to 19, further comprising:
normalizing an updated specified parameter.

21. The method according to any one of claims 1 to 20, further comprising:

normalizing the updated specified parameter based on the parameter upper limit and parameter lower limit of the target value range to obtain a grayscale value of the original image in the original medical image file;
determining the grayscale image corresponding to the original image in the original medical image file based on the grayscale value of the original image in the original medical image file.

22. The method according to any one of claims 1 to 21, further comprising:

obtaining a first grid data; wherein the first grid data comprises at least one of following: a tooth crown grid data, a tooth root grid data;
aligning a coordinate system corresponding to the first grid data with a coordinate system corresponding to the compressed image to obtain a coordinate system transformation matrix;
generating an oral cavity three-dimensional model based on the coordinate system transformation matrix and the first grid data.

23. The method according to claim 22, wherein the generating an oral cavity three-dimensional model based on the coordinate system transformation matrix and the first grid data comprises:

segmenting an original image in an original medical image file based on the second grid data to obtain a second grid data; wherein the second grid data is at least partially different from the first grid data; the second grid data belongs to an oral cavity model data of a patient;
determining a coordinate system corresponding to the second grid data as the coordinate system corresponding to the compressed image; and
generating the oral cavity three-dimensional model based on the coordinate system transformation matrix, the first grid data and the second grid data.

24. The method according to any one of claims 1 to 23, wherein a first identification code is stored in the oral three-dimensional model, and a second identification code is stored in the target file; the determining the target file corresponding to the oral cavity three-dimensional model comprises:

determining the first identification code corresponding to the oral cavity three-dimensional model and the second identification code stored in the target file; and
determining the target file corresponding to the oral cavity three-dimensional model based on the first identification code and the second identification code.

25. The method according to any one of claims 1 to 24, wherein the original image is an oral cavity image; wherein the method further comprises:
obtaining a pre-generated oral cavity three-dimensional model corresponding to the original medical image file in response to a reformation request input by a user, and displaying the oral cavity three-dimensional model.

**26.** A display apparatus, comprising a display device, a memory, a processor and a computer program stored in the memory and executable on the processor, wherein in response to the processor executing the computer program, the method described in claim 1 or any one of claims 3 to 25 is implemented through the display device.

**27.** An electronic device, comprising a memory, a processor and a computer program stored in the memory and executable on the processor, wherein the processor implements the method described in any one of claims 2 to 25 when executing the computer program.

**28.** A computer-readable storage medium, configured to store a computer program, wherein in response to the computer program being executed by a processor, the method described in any one of claims 1 to 25 is implemented.

Generating a target file according to the acquired oral 3D model data — S101

Performing multi-planar reformation according to the target file to obtain a target section image — S102

FIG. 1

Obtaining the first grid data; the first grid data includes at least followings: tooth crown grid data, tooth root grid data; — S201

Aligning the coordinate system corresponding to the first grid data with the coordinate system corresponding to the compressed image to obtain a coordinate system transformation matrix — S202

Generating an oral cavity three-dimensional model according to the coordinate system transformation matrix and the first grid data — S203

FIG. 2

| | |
|---|---|
| Obtaining oral cavity three-dimensional model data | S301 |
| In response to an enabling instruction of the multi-planar reformation function, determining a target file corresponding to the oral cavity three-dimensional model; the target file includes a compressed image compressed according to the original image of the original medical image file | S302 |
| Displaying an oral cavity three-dimensional model with a multi-planar reformation function according to the target file | S303 |

FIG. 3

FIG. 3A

Patient case

Pics   CBCT   List   Other pics

ATPS
APPOINT

3002

Stimulation scheme, may be
different from actual treatment
effect

FIG. 3B

FIG. 4

## INTERNATIONAL SEARCH REPORT

| International application No. |
| --- |
| **PCT/CN2023/143364** |

| A. | CLASSIFICATION OF SUBJECT MATTER |
| --- | --- |

G06T17/00(2006.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; ENTXT; IEEE: 三维模型, 多平面重建, 压缩, 切面, 图像, three-dimensional model, multi-planar reformation, compress, section, image

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116228967 A (SHANGHAI ANGEL ALIGN MEDICAL DEVICES CO., LTD.) 06 June 2023 (2023-06-06) <br> description, paragraphs [0005]-[0195] | 1-28 |
| X | CN 110021053 A (SECOND HOSPITAL OF HEBEI MEDICAL UNIVERSITY) 16 July 2019 (2019-07-16) <br> description, paragraphs [0005]-[0042] | 1-28 |
| A | CN 114864035 A (HEFEI YOFO MEDICAL TECHNOLOGY CO., LTD.) 05 August 2022 (2022-08-05) <br> entire document | 1-28 |
| A | CN 115115772 A (TENCENT TECHNOLOGY (SHENZHEN) CO., LTD.; PEKING UNION MEDICAL COLLEGE HOSPITAL, CHINESE ACADEMY OF MEDICAL SCIENCES) 27 September 2022 (2022-09-27) <br> entire document | 1-28 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 January 2024** | **09 February 2024** |

| Name and mailing address of the ISA/CN | Authorized officer |
| --- | --- |
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143364**

| Patent document cited in search report | | | Publication date (day/month/year) | Patent family member(s) | | | Publication date (day/month/year) |
|---|---|---|---|---|---|---|---|
| CN | 116228967 | A | 06 June 2023 | None | | | |
| CN | 110021053 | A | 16 July 2019 | CN | 110021053 | B | 15 May 2020 |
| CN | 114864035 | A | 05 August 2022 | None | | | |
| CN | 115115772 | A | 27 September 2022 | None | | | |

Form PCT/ISA/210 (patent family annex) (July 2022)